# EUROPEAN PATENT SPECIFICATION

(11) **EP 1 337 426 B1**
(45) Date of publication and mention of the grant of the patent: **13.07.2005**
(21) Application number: 01996488.1
(22) Date of filing: 16.11.2001
(51) Int. Cl.: B62D 5/06

(54) **DRIVE ARRANGEMENT FOR A POWER STEERING PUMP**
ANTRIEBSANORDNUNG FÜR EINE SERVOLENKUNGSPUMPE
DISPOSITIF D'ENTRAINEMENT POUR POMPE DE SERVODIRECTION

(30) Priority: 20.11.2000 SE 0004243
(43) Date of publication of application: 27.08.2003
(73) Proprietor: Scania CV AB (publ), 151 87 Södertälje (SE)
(72) Inventor: WIGREN, Lars, S-151 72 Södertälje (SE)
(86) International application number: PCT/SE2001/002546
(87) International publication number: WO 2002/040337

(56) References cited:
- US-A- 6 039 132

## Description

The present invention relates to a drive arrangement for a steering servo pump in a motor vehicle.

### State of the art

Trucks and buses and now also many passenger cars are provided with servo steering, which means that the vehicle's steering system includes at least one servo mechanism which strengthens the manual steering forces exerted by the driver on the vehicle's steering wheel.

Servo steering, i.e. a servo steering system, incorporates inter alia a hydraulic fluid tank, a hydraulic fluid pump, various valves, hydraulic lines and ducts, and a steering gear which is provided with or cooperates with a steering servo mechanism. The purpose of the hydraulic fluid pump which forms part of the servo steering system and is hereinafter called the steering servo pump is to provide and maintain the necessary working pressure of the hydraulic fluid in the servo steering system.

A practice already known is for the steering servo pump to be driven from the vehicle's engine, e.g. via a V-belt or some other type of driving belt. The disadvantage of this kind of pump drive is that the pump ceases to function if the driving belt comes off or the engine stops. The resulting pressure loss in the servo steering system may also be dangerous from the traffic safety point of view in that the vehicle may of course still be in motion (and therefore need steering) even when the servo pump is no longer powered. Without servo assistance it is usually almost impossible to steer a truck or bus, particularly if the vehicle is moving at low speed.

### Objects of the invention

The primary object of the invention is to provide for a motor vehicle such a type of drive arrangement for the steering servo pump that the latter is always sufficiently powered to generate the necessary working pressure so long as the vehicle is in motion. A further object of the invention is that the drive arrangement should be such that the location of the steering servo pump should be so protected as to minimise the risk of the pump failing as a result of external influences.

### Description of the invention

According to the invention, the aforesaid objects may be achieved by the drive arrangement indicated in the preamble of claim 1 (see US-A-6 039 132) and the novel features indicated in the characterising part of claim 1. Dependent claims 2-8 indicate further features which may distinguish various embodiments of the drive arrangement according to the invention.

The primary distinguishing feature of the drive arrangement according to the invention is thus that the steering servo pump is mounted on the inside/outside of a housing portion of the powered wheel shaft, particularly a housing wall portion, of a wheel shaft, particularly a powered wheel shaft, of the vehicle concerned. At the same time, the pump's input drive shaft is designed to be driven, e.g. via a gear transmission, from a driving means which is in direct and/or indirect driving connection with both the vehicle's propeller shaft and the two wheel drive shafts supported in the wheel shaft.

It may perhaps happen to be perfectly sufficient.to extract (derive) rotary drive for the steering servo pump solely from the propeller shaft or from the pinion shaft driven by the latter, but such a solution of the pump drive problem is not satisfactory, since a fracture of the propeller shaft itself or any of its universal joints (cardan joints) will then result in the servo pump losing its drive. The servo pump also loses its rotary drive in situations in which the propeller shaft is entirely intact but is for some reason no longer rotating.

Nor is extraction of rotary drive for the servo pump solely from one of the wheel drive shafts an entirely satisfactory solution, since the wheel drive shaft concerned may come to rotate very slowly or stop completely on very tight bends. Deriving, according to the invention, the rotary drive for the servo pump from a driving means which is drivingly connected both to the propeller shaft and to the wheel drive shaft, and which is preferably the crown wheel of the differential, optimises the probability of the pump drive shaft's rotation being maintained so long as the vehicle is in motion. Another advantage of using the crown wheel as the servo pump's driving means is that it is then easy to reach a high pump speed, since the crown wheel has a large outside diameter and therefore a gear ring situated at the radially outer portion of the crown wheel will impart to the pinion driven, at its much smaller diameter, on the pump drive shaft a greater speed which is favourable in helping to achieve a high degree of efficiency of the pump.

A preferred constructionally simple and acceptable embodiment of the drive arrangement according to the invention may advantageously exhibit the features indicated in claim 2 whereby the pump housing is mounted on the outside of, and is fastened in, the rear axle housing, and the pump drive shaft then extends into the rear axle housing, in which it has its pump shaft pinion arranged in driving connection with a gear ring on the crown wheel of the differential. In such cases the fastening of the pump housing in the rear axle housing may advantageously be effected according to claim 3.

The pump housing being mounted on the outside of the rear axle housing and hence being situated in a "dirty outdoor environment" need not entail any problems, since the pump housing may without difficulty be made both robust and resistant to moisture and to splashing from the roadway and other unfavourable influences from the environment in which the vehicle concerned is used. It is of course also possible, should it still be considered necessary, to provide the pump housing itself with a special surrounding protective cover or some other type of surrounding protective envelope or extra housing.

An alternative embodiment of the drive arrangement whereby the steering servo pump housing is mounted inside the rear axle housing may advantageously exhibit the constructional features indicated in claim 4.

In order to be able to achieve high pump speeds even when the vehicle is moving at low speed, it is advantageous that the teeth on the crown wheel which are in driving engagement with the teeth of the pump shaft pinion be situated or formed on the radially outer portion of that gearwheel, in which case they are advantageously arranged there in the form of an annular gear ring. The teeth in this gear ring may then be arranged with their tips directed in principally three different alternative ways, as indicated by claims 6-8.

### Brief description of the drawings

The invention will now be illustrated and exemplified by describing embodiments depicted in the attached drawings of a driving arrangement for a steering servo pump, in which:
Fig. 1 depicts in perspective a rigid rear axle for a motor vehicle;
Fig. 2 depicts a horizontal section through the central gear housing of a vehicle's powered rigid axle; and
Fig. 3 depicts a section corresponding to that in Fig. 2, but with the greater portion of the central gear housing omitted and with two different alternative locations of the steering servo pump and the gear ring which is arranged on the crown wheel of the central gear and is responsible for driving the pinion on the drive shaft of the steering servo pump.

### Description of preferred embodiments

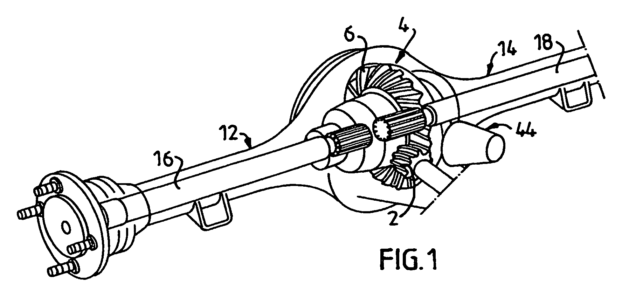

The powered rigid rear axle depicted schematically in Fig. 1 of a vehicle incorporates a rear axle bridge which consists of a housing or fixed cover which encloses wheel drive shafts 16 and 18 and a central gear 4 driven by the propeller shaft pinion 2. This central gear incorporates not only the pinion 2 but also a crown wheel 6 which is driven by the pinion and fastened by threaded connections to a peripheral circular flange 8 on the outside of a differential housing 10 enclosing the differential. The rear axle bridge encloses by means of its two tubular shaft covers 12 and 14 the respective wheel drive shafts 16 and 18 which are supported in the rear axle and which bear the rear axle wheels situated at their opposite ends to the central gear 4 (see Fig. 1). The differential incorporates in a normal manner the differential pinions 20 and 22 which are supported in the differential housing 10, and the drive shaft pinions 24 and 26 which are in driving engagement with the differential pinions and are situated on the inner ends of the wheel drive shafts 16,18.

As indicated above, the invention refers to a drive arrangement for a steering servo pump 28 which is mounted on the inside or outside of a wall portion of the axle housing/axle bridge, in this case on a rear axle. The servo pump 28 has an input drive shaft 30 with a firmly attached shaft pinion 32 which is in driving connection with the vehicle's propeller shaft and the wheel drive shafts 16,18 via the pinion 2 and the central gear 4's crown wheel 6 driven by the pinion 2.

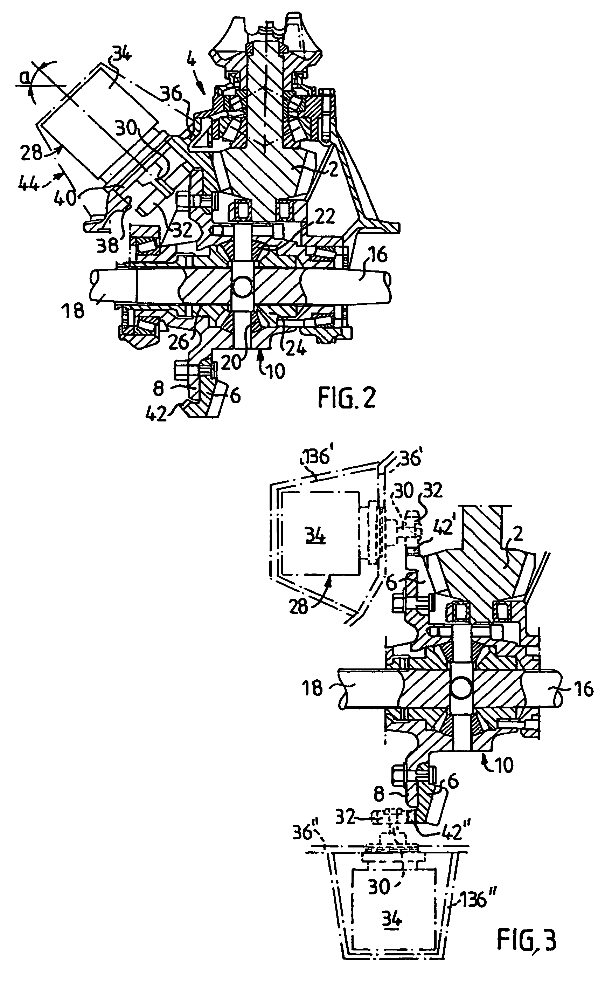

In the embodiment depicted in Fig. 2, the housing 34 of the steering servo pump 28 is situated on the outside of the central gear housing's wall portion 36 which has passing through it an aperture 38 for the pump drive shaft 30 and the cylindrical fastening portion 40 of the pump housing 34. In the space just inside the wall portion 36, the pump shaft pinion 32 is in engagement with teeth 42 of an annular gear ring on the radially outer portion of the crown wheel 6. In this case the teeth 42 of the gear ring are so arranged that their gear tips are directed at an acute angle "a" obliquely inwards towards the wheel drive shaft 18. The angle "a" is about 45° in this particular case. Where considered necessary, the housing 34 of the servo pump 28 may also be surrounded by an extra protective cover 44 which is merely hinted at by a chain-dotted outline in Fig. 2.

In addition to the location depicted in Fig. 2 of the steering servo pump 28 and the placing of the gear ring 42 (which drives the servo pump) on the crown wheel 6, many other alternative pump locations and gear ring placings are also possible. Fig. 3 depicts in the upper and lower portions of the diagram two such alternatives.

The upper portion of Fig. 3 depicts a version whereby the steering servo pump 28 is arranged with its drive shaft 30 parallel to the wheel drive shaft 16,18. In this case the teeth 42' are arranged in the form of a radial external gear ring on a crown wheel 6. In the alternative version in the lower part of Fig. 3, the servo pump 28 is arranged with the drive shaft 30 perpendicular to the wheel drive shafts 16,18, and the teeth 42" are arranged in the form of a gear ring on the left (as seen in the diagram) outside of the crown wheel 6 and with the teeth tips directed parallel with the wheel drive shafts 16,18.

For both the version in the upper portion of Fig. 3 and that in the lower portion, the pump housing 34 may be mounted either on the outside of a housing portion wall 36' or 36" respectively or on the inside of such a housing portion wall 136' or 136" respectively. In particular, the housing portion walls 136' and 136" may either constitute parts of the rear axle housing/rear axle bridge/central gear housing or be parts of a separate pump housing protection cover fastened to the outside of the rear axle housing or the central axle housing.

## Claims

1. A drive arrangement for a steering servo pump (28) in a motor vehicle, whereby the steering servo pump (28) has an input pump drive shaft (30) which, via a drive transmission (32,42), particularly a gearwheel transmission, is designed to be powered from a driving means (6) which is in driving connection with the vehicle's propeller shaft and with wheel drive shafts (16,18) which are supported in the wheel shaft, **characterised in that** the steering servo pump (28) is mounted on the inside or outside of a housing portion (36) of the powered wheel shaft, for example a rear axle of the vehicle, which wheel shaft incorporates an axle housing surrounding the final gear/central gear (4), the differential and the two wheel drive shafts (16,18), and that the steering servo pump (28) has a pump housing (34) attached in or at the axle housing.

2. A drive arrangement according to claim 1, **characterised in that** the wheel shaft is a rear axle and that the pump housing (34) is situated on the outside of, and fastened in, the rear axle housing, whereby the pump drive shaft (30) extends into the rear axle housing and is provided inside it with a firmly attached pump shaft pinion (32) in driving connection with teeth (42) on a crown wheel (6) which is fastened to a differential housing (10) enclosing the differential.

3. A drive arrangement according to claim 2, **characterised in that** at the end of the pump housing (34) where the pump drive shaft (30) protrudes, the pump housing has a cylindrical fastening portion (40) which is fastened in an aperture (38) which passes through the wall (36) of the rear axle housing.

4. A drive arrangement according to claim 1, **characterised in that** the wheel shaft is a rear axle and that the pump housing (34) is mounted inside the rear axle housing and fastened to the inside of the latter's wall (136';136"), whereby the pump drive shaft (30) is provided with a firmly attached pump shaft pinion (32) which is in driving connection with teeth (42'; 42") on a crown wheel (6) which is fastened to a differential housing (10) enclosing the differential.

5. A drive arrangement according to any one of claims 2-4, **characterised in that** the teeth (42';42") on the crown wheel (6) which are in driving connection with the pump shaft pinion (32) are situated on the radially outer portion of the crown wheel.

6. A drive arrangement according to claim 5, **characterised in that** the teeth (42') driving the pump shaft pinion (32) are arranged in the form of an annular gear ring on the crown wheel (6) and have their tips directed radially outwards from the crown wheel.

7. A drive arrangement according to claim 5, **characterised in that** the teeth (42") driving the pump shaft pinion (32) are arranged in the form of an annular gear ring on the crown wheel (6) and have their tips directed parallel with the wheel drive shafts (16,18).

8. A drive arrangement according to claim 5, **characterised in that** the teeth (42) driving the pump shaft pinion (32) are arranged in the form of an annular gear ring on the crown wheel (6) and have their tips directed at an acute angle (a), e.g. about 45°, obliquely inwards towards the wheel drive shaft (18) on the respective side of the differential.

## Patentansprüche

1. Antriebsanordnung für eine Servolenkungspumpe (28) in einem motorisierten Fahrzeug, wobei die Servolenkungspumpe (28) eine eingangsseitige Pumpenantriebswelle (30) aufweist, die über ein Antriebsgetriebe (32, 42), insbesondere ein Zahnradgetriebe, derart ausgebildet ist, dass sie von einem Antriebsmittel (6) angetrieben wird, das in antreibender Verbindung mit der Antriebswelle des Fahrzeugs und mit den Radantriebswellen (16, 18) steht, die in der Radachse gelagert sind,
**dadurch gekennzeichnet, dass** die Servolenkungspumpe (28) innerhalb oder außerhalb eines Gehäusebereichs (36) der angetriebenen Radachse angebracht ist, beispielsweise einer Hinterachse des Fahrzeugs, wobei die Radachse ein Achsgehäuse umfasst, das das Endzahnrad/Zentralzahnrad (4), das Differential und die beiden Radantriebswellen (16, 18) umgibt, und dass die Servolenkungspumpe (28) ein Pumpengehäuse (34) aufweist, das in oder an dem Achsgehäuse angebracht ist.

2. Antriebsanordnung nach Anspruch 1,
**dadurch gekennzeichnet, dass** die Radachse eine Hinterachse ist und dass das Pumpengehäuse (34) außerhalb des Hinterachsengehäuses angeordnet und in diesem befestigt ist, wobei die Pumpenantriebswelle (30) sich in das Hinterachsengehäuse hinein erstreckt und innerhalb von diesem mit einem fest angebrachten Pumpenwellenzahnrad (32) versehen ist, das in antreibender Verbindung mit den Zähnen (42) an einem Kegelrad (6) steht, das an einem Differentialgehäuse (10) befestigt ist, welches das Differential umgibt.

3. Antriebsanordnung nach Anspruch 2,
**dadurch gekennzeichnet, dass** am Ende des Pumpengehäuses (34), wo die Pumpenantriebswelle (30) vorsteht, das Pumpengehäuse einen zylindrischen Befestigungsbereich (40) aufweist, der in einer Öffnung (38) befestigt ist, die sich durch die Wand (36) des Hinterachsengehäuses erstreckt.

4. Antriebsanordnung nach Anspruch 1,
**dadurch gekennzeichnet, dass** die Radachse eine Hinterachse ist und dass das Pumpengehäuse (34) innerhalb des Hinterachsengehäuses angebracht und an der Innenseite der Wand (136'; 136") von letztgenanntem befestigt ist, wobei die Pumpenantriebswelle (30) mit einem fest angebrachten Pumpenwellenzahnrad (32) versehen ist, das in antreibender Verbindung mit Zähnen (42', 42") an einem Kegelrad (6) steht, das an einem Differentialgehäuse (10) befestigt ist, welches das Differential umgibt.

5. Antriebsanordnung nach einem der Ansprüche 2 bis 4,
**dadurch gekennzeichnet, dass** die Zähne (42', 42") an dem Kegelrad (6), die in antreibender Verbindung mit dem Pumpenwellenzahnrad (32) stehen, am radial äußeren Bereich des Kegelrads angeordnet sind.

6. Antriebsanordnung nach Anspruch 5,
**dadurch gekennzeichnet, dass** die Zähne (42'), die das Pumpenwellenzahnrad (32) antreiben, in Form eines ringförmigen Zahnradrings an dem Kegelrad (6) angeordnet sind und dass deren Spitzen von dem Kegelrad in Richtung nach radial auswärts gerichtet sind.

7. Antriebsanordnung nach Anspruch 5,
**dadurch gekennzeichnet, dass** die Zähne (42"), die das Pumpenwellenzahnrad (32) antreiben, in Form eines ringförmigen Zahnradrings an dem Kegelrad (6) angeordnet sind und dass deren Spitzen parallel zu den Radantriebswellen (16, 18) ausgerichtet sind.

8. Antriebsanordnung nach Anspruch 5,
**dadurch gekennzeichnet, dass** die Zähne (42) die das Pumpenwellenzahnrad (32) antreiben, in Form eines ringförmigen Zahnradrings an dem Kegelrad (6) angeordnet sind und dass deren Spitzen in einem spitzen Winkel (a), beispielsweise von etwa 45°, schräg einwärts auf die Radantriebswelle (18) auf der jeweiligen Seite des Differentials zu gerichtet sind.

## Revendications

1. Dispositif d'entraînement pour pompe de servodirection (28) dans un véhicule à moteur, dans lequel la pompe de servodirection (28) a un arbre d'entrée d'entraînement de pompe (30) qui, par l'intermédiaire d'une transmission de commande (32, 42), en particulier d'une transmission à roue dentée, est conçu pour être commandé par moteur par des moyens d'entraînement (6) qui sont en liaison d'entraînement avec l'arbre de transmission du véhicule et avec des arbres d'entraînement de roue (16, 18) qui sont supportés dans l'essieu, **caractérisé en ce que** la pompe de servodirection (28) est montée sur l'extérieur ou l'intérieur d'une partie de boîtier (36) de l'essieu commandé par moteur, par exemple un essieu arrière du véhicule, lequel arbre de roue comprend un boîtier d'essieu entourant le mécanisme d'entraînement terminal / mécanisme d'entraînement central (4), le différentiel et les deux arbres d'entraînement de roue (16, 18), et **en ce que** la pompe de servodirection (28) a un boîtier de pompe (34) fixé dans ou contre le boîtier d'essieu.

2. Dispositif d'entraînement selon la revendication 1, **caractérisé en ce que** l'arbre de roue est un essieu arrière et **en ce que** le boîtier de pompe (34) est situé sur l'extérieur de, et fixé dans, le boîtier de l'essieu arrière, par lequel l'arbre d'entraînement de pompe (30) s'étend dans le boîtier de l'essieu arrière et est pourvu à l'intérieur de ce dernier d'un pignon d'arbre de pompe (32), solidement fixé, en liaison d'entraînement avec des dents (42) sur une couronne d'entraînement (6) qui est fixée à un boîtier de différentiel (10) entourant le différentiel.

3. Dispositif d'entraînement selon la revendication 2, **caractérisé en ce qu'**à l'extrémité du boîtier de pompe (34) où l'arbre d'entraînement de pompe (30) fait saillie, le boîtier de pompe a une partie de fixation cylindrique (40) qui est fixée dans une ouverture (38) qui traverse la paroi (36) du boîtier d'essieu arrière.

4. Dispositif d'entraînement selon la revendication 1, **caractérisé en ce que** l'arbre de roue est un essieu arrière et **en ce que** le boîtier de pompe (34) est monté à l'intérieur du boîtier de l'essieu arrière et fixé sur l'intérieur de la paroi de ce dernier (136' ; 136"), par lequel l'arbre d'entraînement de pompe (30) est pourvu d'un pignon d'arbre de pompe (32), solidement fixé, qui est en liaison d'entraînement avec des dents (42' ; 42") sur une couronne d'entraînement (6) qui est fixée à un boîtier de différentiel (10) entourant le différentiel.

5. Dispositif d'entraînement selon l'une quelconque des revendications 2 à 4, **caractérisé en ce** les dents (42' ; 42") sur la couronne d'entraînement (6), qui sont en liaison d'entraînement avec le pignon d'arbre de pompe (32), sont situées sur la partie externe radiale de la couronne d'entraînement.

6. Dispositif d'entraînement selon la revendication 5, **caractérisé en ce que** les dents (42') entraînant le pignon d'arbre de pompe (32) sont arrangées en forme d'une couronne à denture extérieure annulaire sur la couronne d'entraînement (6) et ont leurs extrémités d'engrenage dirigées radialement vers l'extérieur à partir de la couronne d'entraînement.

7. Dispositif d'entraînement selon la revendication 5, **caractérisé en ce que** les dents (42") entraînant le pignon d'arbre de pompe (32) sont arrangées en forme d'une couronne à denture extérieure annulaire sur la couronne d'entraînement (6) et ont leurs extrémités d'engrenage dirigées parallèlement aux arbres d'entraînement de roue (16, 18).

8. Dispositif d'entraînement selon la revendication 5, **caractérisé en ce que** les dents (42) entraînant le pignon d'arbre de pompe (32) sont arrangées en forme d'une couronne à denture extérieure annulaire sur la couronne d'entraînement (6) et ont leurs extrémités d'engrenage dirigées à un angle aigu (a), par exemple d'environ 45°, de manière oblique vers l'intérieur en direction de l'arbre d'entraînement de roue (18) sur le côté respectif du différentiel.
